# EUROPÄISCHE PATENTSCHRIFT

(11) **EP 2 988 922 B1**
(45) Veröffentlichungstag und Bekanntmachung des Hinweises auf die Patenterteilung: **03.06.2020**
(21) Anmeldenummer: 14728415.2
(22) Anmeldetag: 22.04.2014
(51) Int. Cl.: B29C 70/44, B29C 70/54

(54) **FLIESSHILFE FÜR INFUSIONSAUFBAU, INFUSIONSAUFBAU MIT FLIESSHILFE SOWIE VERFAHREN ZUM INFILTRIEREN VON FASERMATERIAL MIT HARZ**
FLOW PROMOTER FOR INFUSION STRUCTURE, INFUSION STRUCTURE WITH FLOW PROMOTER AND METHOD FOR INFILTRATING FIBROUS MATERIAL WITH RESIN
ÉLÉMENT FACILITANT L'ÉCOULEMENT POUR STRUCTURE D'INFUSION, STRUCTURE D'INFUSION DOTÉE D'UN ÉLÉMENT FACILITANT L'ÉCOULEMENT AINSI QUE PROCÉDÉ D'INFILTRATION DE MATÉRIAU FIBREUX PAR DE LA RÉSINE

(30) Priorität: 23.04.2013 DE 102013006940
(43) Veröffentlichungstag der Anmeldung: 02.03.2016
(73) Patentinhaber: Airbus Defence and Space GmbH, 85521 Ottobrunn (DE)
(72) Erfinder: FILSINGER, Jürgen, 85635 Höhenkirchen-Siegertsbrunn (DE); STEINHILBER, Michael, 84034 Landshut (DE)
(74) Vertreter: Isarpatent
(86) Internationale Anmeldenummer: PCT/DE2014/000209
(87) Internationale Veröffentlichungsnummer: WO 2014/173389

(56) Entgegenhaltungen:
- WO-A1-2007/054097
- US-A- 4 560 523
- US-A- 4 902 215
- US-A- 4 942 013
- US-A1- 2008 093 761

## Beschreibung

Die vorliegende Erfindung betrifft eine Fließhilfe für einen Infusionsaufbau, einen Infusionsaufbau mit einer solchen Fließhilfe sowie ein Verfahren zum Infiltrieren von Fasermaterial mit Harz zur Herstellung eines Faserverbundbauteils.

Zur Herstellung von Faserverbundbauteilen werden häufig formgebende Werkzeuge verwendet, in welche mit Harz zu infiltrierendes Fasermaterial eingelegt wird. Das Fasermaterial wird dann z. B. mit einer gasdichten und zum Werkzeug hin abdichtbaren Umhüllung abgedeckt, und Harz wird an mindestens einer Stelle des so gebildeten "Infusionsaufbaus" infiltriert, indem an mindestens einer anderen Stelle des Aufbaus ein Unterdruck im gasdicht abgedichteten Innenraum des Aufbaus erzeugt wird. Diese als Vakuuminfusionstechnik bekannte Methode wird z. B. bei den so genannten "Seaman Composites Resin Infusion Molding" (SCRIMP)-, "Vaccum Assisted Resin Transfer Molding" (VARTM)-, "Vacuum Assisted Resin Injection" (VARI)- oder "Vacuum Assisted Process" (VAP)-Verfahren angewendet. Als VAP-Verfahren ist dabei z. B. eine Variante einer Niederdruck-Infiltrationstechniken zu verstehen.

Für eine hohe Qualität des fertigen Faserverbundbauteils ist es wichtig, dass beim Harzinfiltrationsvorgang das Harz das Fasermaterial möglichst gleichmäßig durchtränkt, also z. B. an keiner Stelle im Innenraum des Infusionsaufbaus ein allzu großer Fließwiderstand entsteht. Um das Harz möglichst gleichmäßig in das gesamte Fasermaterial einzuleiten, können zwischen der Umhüllung und dem Fasermaterial druckbeständige Strukturen mit Fließkanälen zwischengelegt werden, z. B. in Form von grobmaschigen textilen Flächengebilden (z.B. Gewebe, Gestricke, Gewirke) oder gitterartigen Matten. Derartige zusammen mit dem zu infiltrierenden Fasermaterial in den Infusionsaufbau eingebrachte Strukturen zum Fördern einer raschen und/oder besonders gleichmäßigen Harzverteilung im Fasermaterial werden üblicherweise als "Fließhilfen" bezeichnet. In anderen Fällen sind direkt im Werkzeug zum Fasermaterial hin offenliegende Fließkanäle, d. h. rillenartige Nuten vorgesehen.

In der Druckschrift US 6,656,411 B1 ist ein Werkzeug zur Herstellung von Faserverbundbauteilen gezeigt, welches eine Auflagefläche zur Aufnahme einer ersten Lage Fasermaterial aufweist, wobei auf der ersten Lage Fasermaterial ein druckfestes Zwischenstück angeordnet ist, welches an einer oberen Oberfläche und einer unteren Oberfläche rillenartige Kanäle aufweist. Auf dem Zwischenstück ist eine zweite Lage Fasermaterial angeordnet. Auf der zweiten Lage Fasermaterial ist eine gasdichte Umhüllung vorgesehen. Harz kann beidseitig des Zwischenstücks an den Oberflächen des Zwischenstücks durch die Kanäle zu den beiden Lagen geleitet werden. Der Harzfluss wird durch eine mittels einer Vakuumpumpe erzeugte Druckdifferenz bewirkt.

Bei diesem Stand der Technik ist nachteilig, dass ein Überschuss an Harz meist nicht vermieden werden kann. Meist verbleibt in den Verteilermedien und/oder an dem herzustellenden Faserverbundbauteil eine große Menge restlichen, ungenutzten Harzmaterials.

In der Druckschrift US 6,406,659 B1 ist ein Werkzeug zur Herstellung von Faserverbundbauteilen gezeigt, welches eine Auflagefläche zur Aufnahme von mit Harz zu infiltrierendem Fasermaterial aufweist, wobei über dem Fasermaterial eine erste gasdichte Folie angeordnet ist, und zwischen dieser und einer zweiten gasdichten Folie ist ein druckfestes Zwischenstück vorgesehen, welches rillenartige Kanäle aufweist. Durch Anlegen einer Druckdifferenz kann die erste Folie dazu gebracht werden, sich von dem Fasermaterial zu lösen und sich stattdessen in die Kanäle des Zwischenstücks zu legen. Auf diese Weise können Verteilerkanäle direkt an der Oberfläche des Fasermaterials bereitgestellt werden. Mittels der zweiten Folie kann das Erzeugen der Druckdifferenz erleichtert werden.

Bei diesem Stand der Technik ist nachteilig, dass zum einen eine Vielzahl an Komponenten erforderlich ist, und dass das Einstellen der Druckdifferenz einen größeren vorrichtungstechnischen Aufwand und prozesstechnischen Steuerungsaufwand erfordert.

Aus der WO 2007/054097 A1 ist ein Verfahren zur Herstellung eines Verbundbauteils unter Zuhilfenahme einer Fließhilfe bekannt. Diese Fließhilfe ist durch eine Vielzahl von elastischen rohrförmigen Injektionsleisten gebildet, die zur Herstellung des Verbundbauteils auf eine auf einer Werkzeugoberfläche eines Formwerkzeugteils aufgelegte Fasermatte aufgelegt wird.
Die Druckschriften US 4 902 215 A und US 4 942 013 A offenbaren jeweils Fließhilfen, die durch eine harzdurchlässige und eine harzundurchlässige Matte gebildet sind, zwischen denen eine Zwischenschicht zur Verteilung von Harz vorgesehen ist.

In der US 2008/093761 A1 wird ein Membransack mit einer gasundurchlässigen oberen Lage und einer perforierten unteren Lage beschrieben, welche entlang paralleler Nähte miteinander verbunden sind. Dadurch werden ein zentraler Vakuumkanal und zwei seitlich von diesem angeordnete Harzeinlasskanäle zwischen den Lagen ausgebildet. Die US 4 560 523 A beschreibt einen Schaumkern zur Verteilung von Harz, welcher einen Längskanal aufweist, von welchem Querkanäle abzweigen und in seitlichen Öffnungen münden.

Aufgabe der vorliegenden Erfindung ist es, eine Vorrichtung und ein Verfahren bereitzustellen, womit Fasermaterial zur Herstellung eines Faserverbundbauteils möglichst gleichförmig mit Harz infiltriert werden kann, insbesondere ohne hohen Harzbedarf, und möglichst auch auf effektive bzw. effiziente Weise.

Bei der erfindungsgemäßen Fließhilfe für einen Infusionsaufbau zum Infiltrieren von Fasermaterial mit Harz zur Herstellung eines Faserverbundbauteils wird diese Aufgabe dadurch gelöst, dass die Fließhilfe mit einer harzdichten oberen Lage, welche eine flächige Erstreckung aufweist, und einer unteren Lage, welche eine flächige Erstreckung aufweist, ausgeführt ist, wobei die obere Lage und die untere Lage in einem Randbereich der Fließhilfe miteinander verbunden sind und einen Fließraum zwischen den beiden Lagen bereitstellen, wobei die obere Lage und die untere Lage innerhalb eines vom Randbereich umgrenzten Mittelbereichs an mehreren Stellen punkt- und/oder linienförmig und/oder flächig derart miteinander verbunden sind, so dass zwischen den beiden Lagen als Fließpfade zum gerichteten Weiterleiten des Harzes innerhalb des Fließraums mindestens ein Längskanal gebildet ist, von welchem aus sich mehrere Querkanäle erstrecken, und wobei die untere Lage mindestens einen Auslass zum Ausleiten von Harz aus der Fließhilfe heraus in einen Innenraum des Infusionsaufbaus bereitstellt, und mit einem Einlass zum Zuführen des Harzes in den Fließraum.

Mittels einer solchen Fließhilfe kann das Harz gleichförmig über das gesamte Fasermaterial verteilt werden. Das Harz kann sich in dem Fließraum ausbreiten und verteilen und weitgehend unabhängig von (Unter-)Druckverhältnissen in dem Innenraum des Infusionsaufbaus bereitgestellt werden. Weder eine druckstabile Struktur bzw. ein druckfestes Zwischenstück noch ein Werkzeug mit speziellen Kanälen sind erforderlich. Somit vereinfacht sich auch der Infusionsaufbau. Das Zuführen des Harzes bzw. dessen Weiterleitung innerhalb der Fließhilfe kann vorteilhaft gesteuert werden, indem z. B. ein bestimmter (Über-)Druck innerhalb der Fließhilfe bzw. an deren Einlass eingestellt wird. Das Verteilen und Weiterleiten des Harzes innerhalb der Fließhilfe kann somit vorteilhaft auch zumindest weitgehend von dem in Verwendungssituationen im Bereich des Auslasses der Fließhilfe herrschenden Unterdruck entkoppelt werden.

Wahlweise kann das Harz mit einem Überdruck bereitgestellt werden, wodurch das Ausbreiten in dem Fließraum und das Ausleiten aus dem Fließraum beschleunigt werden kann. Hierdurch kann die Effizienz bei der Herstellung von Faserverbundbauteilen erhöht werden. Eine die Harzinfusion treibende Druckdifferenz ist nicht wie bei bisher bekannten Vakuuminfusionsverfahren auf die Druckdifferenz zwischen Innenraum und Außenraum des Infusionsaufbaus beschränkt (bei Atmosphärendruck entsprechend etwa max. 1000 mbar bei vakuumunterstützten Infusionen ohne Einsatz einer Druckkammer), sondern kann deutlich darüber liegen. Mittels der Fließhilfe kann dabei die Gefahr reduziert werden, dass Fasermaterial durch das fließende Harz aufgeschwemmt wird, also z. B. gestaucht wird oder verlagert wird. Das Ausbreiten des Harzes in einer Richtung quer zu einer Hauptausdehnungsrichtung/-ebene des Fasermaterials kann vorteilhaft im Wesentlichen allein innerhalb des Fließraums erfolgen. Sobald das Harz aus der Fließhilfe austritt, kann es weitgehend unabhängig von irgendeinem (in einem Zuleitungssystem/Einlass aufgebauten bzw. in der Fließhilfe herrschenden) Überdruck an geeigneten Stellen des Fasermaterials in das Fasermaterial geleitet werden. Das Fasermaterial wird also nicht aufgeschwemmt. Das Harz muss nicht über größere Strecken in einer Haupterstreckungsrichtung des Fasermaterials durch das Fasermaterial geleitet werden. Die Anordnung des Fasermaterials oder die Ausrichtung der Fasern wird somit nicht durch den Harzfluss beeinträchtigt.

Die geometrisch und in ihrer Größe prinzipiell frei dimensionierbare erfindungsgemäße Fließhilfe, bevorzugt jedoch mit einer flächig ausgedehnt platten- oder kissenartigen Formgestaltung, liefert auch den Vorteil, dass eine zu fördernde Harzmenge weitgehend unabhängig von den Eigenschaften der übrigen Komponenten des betreffenden Infusionsaufbaus eingestellt werden kann. Auch kann die Fließhilfe unabhängig von dem Infusionsaufbau nach dem Infiltrieren entfernt werden. Der Infusionsaufbau kann auch auf einfache Weise nach einem erfolgten Infiltrieren eines Faserverbundbauteils sofort wieder genutzt werden für ein weiteres Faserverbundbauteil, z. B. indem eine weitere (z. B. neue) Fließhilfe vorgesehen wird. Das weitere Faserverbundbauteil kann dann auch eine andere Geometrie oder Abmessung aufweisen, und ist z. B. nur in einem Teil des Werkzeugs angeordnet, und für das weitere Faserverbundbauteil kann eine geeignete (insbesondere geometrisch angepasste) Fließhilfe bereitgestellt werden. Die Fließhilfe ermöglicht auch, auf einfache Weise von einem bestimmten Harzsystem auf ein anderes Harzsystem zu wechseln, z. B. von Polyesterharzen auf Epoxidharze oder umgekehrt. Der Infusionsaufbau muss dabei auch nicht auf aufwändige Weise gereinigt werden, insbesondere müssen keine Harzreste aus Gegenformen, speziell aus rillenartigen Harzkanälen in Gegenformen entfernt werden.

Der Begriff "Harz" soll im Sinne der Erfindung ein beliebiges Matrixmaterial bezeichnen, welches dazu geeignet ist, mit einem Fasermaterial ein Faserverbundbauteil zu bilden. Das Matrixmaterial kann dabei z. B. auch bereits einen Härter enthalten (Mehrkomponentenharzsystem). Harz im engeren Sinne bezieht sich dabei auf duroplastische Kunststoffe, z. B. Epoxidharzsysteme. Nicht ausgeschlossen sein sollen jedoch auch thermoplastische Kunststoffe.

Von dem Begriff "harzdichte Lage" ist dabei jede Lage umfasst, durch welche Harz nicht hindurchtreten kann, auch nicht bei dem in der Verwendungssituation der erfindungsgemäßen Fließhilfe zweckdienlicher Weise einzustellenden maximalen Innendruck in der Fließhilfe.

Die im Folgenden verwendeten Begriffe "oben" und "unten" beziehen sich nicht notwendigerweise auf eine vertikale Erstreckung, sondern sind im Sinne von "vom Werkzeug abgewandte Seite" und "zum Werkzeug hingewandte Seite" zu verstehen.

Von dem Begriff "obere Lage" ist somit die Lage der Fließhilfe umfasst, welche von dem Fasermaterial (Halbzeug) bzw. von einem herzustellenden Faserverbundbauteil weg weist. Von dem Begriff "untere Lage" ist somit eine Lage umfasst, welche seitens des Fasermaterials, also halbzeugseitig angeordnet ist, also welche in einem Infusionsaufbau an dem mit Harz zu infiltrierenden Fasermaterial zur Anlage kommen kann oder zumindest das Harz in die Richtung des Fasermaterials leiten kann.

Von dem Begriff "Einlass" ist dabei eine Zugangsöffnung umfasst, über welche Harz in den Fließraum der Fließhilfe eingeleitet werden kann, wobei der Einlass auch einen Abschnitt einer Zugangsleitung oder einen Flansch zum Verbinden der Fließhilfe mit einer Zugangsleitung umfassen kann.

Von dem Begriff "Innenraum des Infusionsaufbaus" ist dabei ein Raum umfasst, in welchem zumindest das Fasermaterial bzw. das herzustellende Faserverbundbauteil und die Fließhilfe angeordnet sind. Dieser Innenraum wird typischerweise von einer Werkzeugfläche und einer zur Werkzeugfläche abgedichteten Umhüllung umgeben.

Von dem Begriff "Fließraum" ist dabei ein zwischen den beiden Lagen der Fließhilfe gebildeter und von diesen umgrenzter Raum umfasst, in welchem sich das Harz ausbreiten kann und weitergeleitet werden kann, um aus dem Fließraum heraus ausgeleitet zu werden und in Kontakt mit dem Fasermaterial gebracht zu werden. Der Fließraum kann z. B. als zusammenhängender Fließraum ausgebildet sein, so dass alle Bereiche des Fließraums über einen einzigen Einlass mit dem Harz versorgbar sind. Wahlweise können jedoch auch mehrere Einlässe vorgesehen sein. Dies z. B. zur raschen Harzversorgung eines zusammenhängenden Fließraumes. Auch können mehrere Einlässe z. B. mit jeweils einem von mehreren Teilbereichen des Fließraums gekoppelt sein.

Die beiden Lagen der Fließhilfe können in ihrem Randbereich auf vielfältige Art miteinander verbunden sein. Bevorzugt sind die Lagen in dem Randbereich verschweißt, verklebt oder vernäht, wobei auch eine Kombination dieser Verbindungsarten vorgesehen sein kann. Der Randbereich weist also bevorzugt eine Schweißnaht, eine Klebenaht und/oder ein genähte Naht auf. Die Naht ist bevorzugt umlaufend vorgesehen, wobei die Naht an mindestens einer Stelle unterbrochen sein kann, so dass der Einlass oder eine Austrittsöffnung durch die unterbrochene Nahtstelle bereitgestellt bzw. dort hindurchverlaufend vorgesehen werden kann. Alternativ oder zusätzlich zu einem solchen Einlass bzw. Auslass im Randbereich kann wenigstens ein Einlass oder Auslass auch in einem anderen Bereich der Fließhilfe vorgesehen sein.

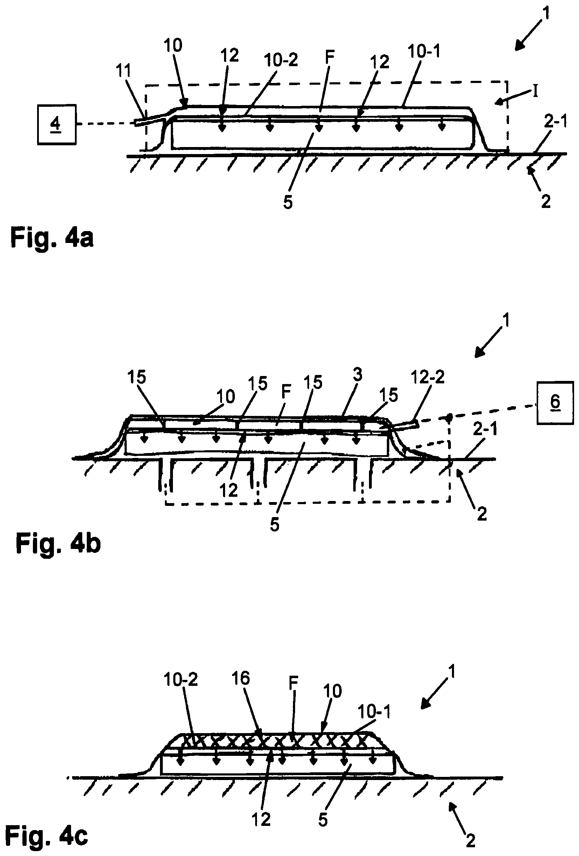

Dass die beiden Lagen "in einem Randbereich der Fließhilfe" miteinander verbunden sind, bedeutet nicht notwendigerweise, dass dieser Randbereich gleichzeitig einen Randbereich der beiden Lagen darstellt. Vielmehr kann sich wenigstens eine der Lagen auch über den genannten "Randbereich der Fließhilfe" hinaus erstrecken (vgl. z. B. die unten noch beschriebenen Beispiele gemäß der Fig. 4a bis 4c).

Die beiden Lagen können aus einem Folienmaterial und/oder einem Texilmaterial gebildet sein. Beispielsweise ist die obere Lage aus einem Folienmaterial und die untere Lage aus einem Textilmaterial gebildet. Wahlweise sind die Lagen sowohl gas- als auch flüssigkeitsdicht, lediglich flüssigkeitsdicht, oder (zumindest die untere Lage) aufgrund einer Porosität des Materials oder einer Perforation in dem Material sowohl gas- als auch flüssigkeitsdurchlässig. Diese Eigenschaften des Materials können einzeln oder in Kombination auch jeweils abschnittsweise über einen vorgebbaren Flächenbereich der Fließhilfe bzw. der einzelnen Lagen ausgebildet sein. Gemäß einer Variante ist die obere Lage gas- und flüssigkeitsdicht, und die untere Lage ist nicht gasdicht. Hierdurch kann die obere Lage wahlweise auch die Funktion einer gasdichten Umhüllung der im Stand der Technik bei Vakuuminfusionsverfahren üblicherweise verwendeten Art ("Vakuumfolie") übernehmen. Gemäß einer anderen Variante übernimmt die Fließhilfe die Funktion einer gasdichten Umhüllung nach Art einer "Vakuumfolie".

Die Fließhilfe ist durch die Ausgestaltung mit zwei miteinander verbundenen Lagen, zwischen denen ein Fließraum gebildet werden kann, eine expandierbare Vorrichtung, mittels welcher der Harzfluss einstellbar ist. Dabei kann die Fließhilfe durch das Harz selbst expandiert werden, insbesondere auch indem in dem Harzmedium ein Überdruck erzeugt wird bzw. indem das Harz mit einem Überdruck bereitgestellt wird.

Von dem Begriff "Auslass" ist dabei eine einzelne Öffnung oder eine Mehrzahl von Öffnungen umfasst, durch welche das Harz austreten kann, insbesondere bei einem Überdruck (bezogen auf den atmosphärischen Druck und/oder bezogen auf den Druck "jenseits" des Auslasses, also dem Raum, in welchem das zu infiltrierende Fasermaterial sich befindet), um in das Fasermaterial eingeleitet zu werden. Bevorzugt umfasst der Auslass eine Vielzahl von in der unteren Lage derart angeordneten Öffnungen, dass das Harz lokal an möglichst vielen geeigneten Stellen in das Fasermaterial eingebracht werden kann, ohne längere Wege durch das Fasermaterial fließen zu müssen.

Erfindungsgemäß sind die beiden Lagen an mindestens einer Stelle innerhalb eines vom Randbereich umgrenzten Mittelbereichs miteinander verbunden. Hierdurch kann der Fließhilfe eine stabile Struktur verliehen werden, insbesondere auch im Hinblick auf einen erhöhten Innendruck in dem Fließraum. Auch können die beiden Lagen durch die Verbindungsstelle(n) in einer gewünschten Anordnung und/oder einem bestimmten Abstand zueinander ausgerichtet werden.

Die Verbindungsstelle in dem Fließraum kann (jeweils) über die Ausdehnung bzw. Fläche der Lagen frei gewählt sein. Die Verbindungsstelle kann (jeweils) in punktueller, linienförmiger und/oder flächiger Form bereitgestellt sein. Die Verbindungsstelle kann die beiden Lagen in einem definierten Abstand zueinander halten, auch bei einem Überdruck, der in dem Fließraum von innen auf die beiden Lagen wirkt. Der Abstand kann über die Erstreckung der Fließhilfe auch variabel sein, insbesondere um einen in bestimmten Abschnitten der Fließhilfe jeweils unterschiedlichen Fließwiderstand vorzugeben. Es können auch mehrere Verbindungsstellen vorgesehen sein, und die beiden Lagen können in einem zumindest entlang von vorgegebenen Fließpfaden des Fließraums eingehaltenen einheitlichen Abstand zueinander gehalten werden.

Bevorzugt weist die Fließhilfe in dem Fließraum mindestens ein Verbindungsmittel auf, mittels welchem die beiden Lagen miteinander verbunden sind, insbesondere in einem definierten Abstand zueinander. Das Verbindungsmittel kann z. B. eine Verbindungsnaht sein, welche in einer Verbindungsstelle der oberen Lage und einer entsprechenden Verbindungsstelle der unteren Lage fixiert ist. Das Verbindungsmittel kann z. B. auch als eine Trennwandung ausgebildet sein, insbesondere aus einem Material wie die erste oder zweite Lage. Die Trennwandung kann mit den beiden Lagen z. B. verklebt oder verschweißt oder vernäht sein. Das bzw. die Verbindungsmittel können so angeordnet werden, dass das Harz auf eine bestimmte Weise (entlang von vorgegebenen Fließpfaden) durch den Fließraum fließt. Die Verbindungsmittel können z. B. so ausgebildet sein, dass die beiden Lagen im Bereich eines Hauptkanals in einem größeren Abstand zueinander angeordnet sind als im Bereich von davon abzweigenden Nebenkanälen, so dass ein Fließwiderstand auch in Abhängigkeit der in den jeweiligen Kanälen zu fördernden Harzmenge eingestellt werden kann.

Erfindungsgemäß sind die beiden Lagen in dem Mittelbereich an mehreren Stellen punkt- und/oder linienförmig und/oder flächig derart miteinander verbunden, so dass zwischen den beiden Lagen mindestens ein Fließpfad zum gerichteten Weiterleiten des Harzes innerhalb des Fließraums bereitgestellt ist. Hierdurch kann das Harz auf vordefinierbare Weise in einzelne Teilbereiche des Fließraums und damit z. B. zu einzelnen Öffnungen des Auslasses weitergeleitet werden. Die Verbindungsstellen sind so angeordnet, dass sie jeweils seitliche Begrenzungen von Kanälen für eine gerichtete Ausbreitung des Harzes innerhalb des Fließraums bilden, z. B. auch dadurch, dass eine Vielzahl von punktförmigen Verbindungsstellen dicht aufeinanderfolgend hintereinander angeordnet sind (z. B. entlang einer geradlinigen oder nicht-geradlinigen Verbindungslinie). Hierdurch kann eine Hauptströmungsrichtung vorgegeben werden, und dennoch besteht die Möglichkeit, dass Harz von einem Kanal mit einem Harzüberschuss in einen benachbarten Kanal mit einem Harzmangel oder einer relativ geringeren Harzmenge fließt.

Der bzw. die durch die Verbindungsstellen gebildeten Fließpfade können sich z. B. gitterartig (z. B. schachbrettartig) in dem Fließraum erstrecken. Ein jeweiliger Fließpfad kann z. B. in Form eines Längskanals, eines Querkanals oder auch eines sich diagonal erstreckenden Kanals gebildet sein. Erfindungsgemäß sind sind die Lagen derart miteinander verbunden, dass mindestens ein "Hauptkanal" (Längskanal) gebildet ist, von welchem sich mehrere Querkanäle aus erstrecken, insbesondere senkrecht vom Hauptkanal abzweigen. Auf diese Weise kann das Harz bei einem einfachen Aufbau der Fließvorrichtung homogen über die gesamte (laterale) Ausdehnung der Fließhilfe bereitgestellt werden. Wie zuvor beschrieben, können in den Verbindungsstellen auch eigens Verbindungsmittel vorgesehen sein, welche die beiden Lagen miteinander verbinden.

Das Strukturieren des Fließraums in mehrere Fließpfade liefert auch den Vorteil, dass die gesamte Harzmenge auf hierarchische Weise weitergeleitet werden kann, z. B. zunächst in einem breiten (Haupt-)Kanal mit einem verhältnismäßig geringen Fließwiderstand, und dann in schmaleren (Neben-)Kanälen, die sich ausgehend von dem breiteren Kanal erstrecken. Mit anderen Worten kann mittels der Verbindungsstellen die Ausrichtung und auch der Querschnitt von einzelnen harzführenden (Teil-)Bereichen eingestellt werden. Es können mehrere miteinander gekoppelte oder weitgehend unabhängig voneinander mit Harz beschickbare Fließpfade durch die Verbindungsstellen gebildet sein.

Gemäß einer Variante ist die obere Lage zwischen einigen oder allen Verbindungsstellen gerafft, wohingegen die untere Lage bevorzugt ungerafft ist. Die Raffung der oberen Lage (z. B. Kunststofffolie) liegt bevorzugt vor, bevor ein Verbinden der beiden Lagen miteinander an den Verbindungsstellen erfolgt. Durch die Raffung können sich bei Druckbeaufschlagung der Fließhilfe voluminösere Kanäle ausbilden, auch wenn die Lagen in den Verbindungsstellen nahe beieinander liegen bzw. aneinander anliegen. Die Raffung stellt eine im Verhältnis zur unteren Lage flächenmäßig größere obere Lage bereit. Die Raffung von im Wesentlichen nur der oberen Lage liefert dabei den Vorteil, dass auch bei Druckbeaufschlagung der Fließhilfe die untere Lage zumindest im Wesentlichen in einer Ebene (bzw. der Oberflächenkontur des mit dem Harz zu infiltrierenden Fasermaterials folgend) angeordnet werden kann und flächig auf Fasermaterial zur Anlage kommen kann. Dies z. B. auch dann, wenn zwischen den Lagen keine Verbindungsstellen vorgesehen sind, welche die Lagen in einem vorgegebenen Abstand zueinander halten.

Wahlweise kann die obere Lage elastisch dehnbar sein und die untere Lage im Wesentlichen nicht dehnbar, so dass sich bei einer Druckbeaufschlagung die Kanäle zwischen den Verbindungsstellen aufgrund einer (stärkeren) Dehnung der oberen Lage ausbilden. Nichtsdestotrotz kann auch die untere Lage elastisch dehnbar sein, in diesem Fall jedoch bevorzugt weniger elastisch als die obere Lage. Bei Druckbeaufschlagung der Fließhilfe dehnt sich dann die obere Lage aus und wird flächenmäßig größer als die untere Lage. Die obere Lage sorgt für eine Volumenausdehnung der Fließhilfe. Bevorzugt sorgt allein die obere Lage für die Volumenausdehnung. Die Anordnung der unteren Lage relativ zu dem Fasermaterial ändert sich dann bei der Volumenzunahme bzw. Expansion nicht. Bei einer flächenmäßig größeren oberen Lage kann die untere Lage flächig auf dem herzustellenden Faserverbundbauteil bzw. dem Fasermaterial zur Anlage gebracht werden, und das gleichförmige Infiltrieren des Fasermaterials kann unabhängig von der (Querschnitts-)Geometrie der Kanäle erfolgen.

Gemäß einer vorteilhaften Ausführungsform ist zwischen den beiden Lagen, also im Fließraum, ein Verteilermedium (zur Sicherstellung eines leichtgängigen Harzflusses) angeordnet. Das Verteilermedium kann z. B. von einer "herkömmlichen Fließhilfe" (wie z. B. eingangs mit Bezug auf den Stand der Technik beschrieben) gebildet sein. Hierdurch kann das Harz noch gleichförmiger und/oder richtungsspezifischer in bestimmte Abschnitte/Bereiche der erfindungsgemäßen Fließhilfe verteilt werden: dazu ist das Verteilermedium in den Kanälen der Fließhilfe angeordnet, so dass diese insbesondere bei aktiviertem Vakuumanschluß geöffnet sind. Das Weiterleiten des Harzes kann auf einfachere Weise in bestimmten Richtungen oder in vordefinierbaren Mengenanteilen in jeweilige Bereiche des Fließraums erfolgen. Das Verteilermedium kann dabei wahlweise nur in einem Bereich des Fließraums oder im gesamten Fließraum vorgesehen sein. Es können auch unterschiedliche Verteilermedien miteinander kombiniert werden, insbesondere solche, die sich im Hinblick auf den Fließwiderstand unterscheiden. Bevorzugt sind Verteilermedien mit einem relativ niedrigeren Fließwiderstand dabei in Bereichen des Fließraums angeordnet, in welchen das Harz ansonsten nur nach Überwindung eines relativ größeren Fließwiderstands gelangen könnte, z. B. in den zum betreffenden Einlass am weitesten entfernten Bereichen der Fließhilfe. Hierdurch kann die gleichförmige Verteilung bzw. Ausbreitung des Harzes weiter verbessert werden.

Das Verteilermedium kann z. B. als ein grobmaschiges textiles Flächengebilde (z.B. Gewebe, Gestricke, Gewirke) mit dreidimensionaler Erstreckung, z. B. Vlies oder als ein Verteilergewebe mit einer z. B. relativ grobmaschigen Struktur und einem möglichst geringen Fließwiderstand, oder als gitterartige Matte mit dreidimensionaler Erstreckung ausgebildet sein. Es kann z. B. so genannte offene Maschenware verwendet werden, insbesondere mit Maschen, bei welchen sich einzelne Maschenfüße der Masche nicht kreuzen. In einer Ausführungsform ist das Verteilermedium durch einen formbeständigen Körper gebildet, welcher zwischen Verbindungsstellen angeordnet ist, an welchen die beiden Lagen innerhalb des Fließraums, d. h. im vom Randbereich umgrenzten Mittelbereich miteinander verbunden sind. Gemäß einer Variante bilden die Verbindungsstellen Quer- und Längskanäle, und das Verteilermedium (z. b. als formbeständiger Körper gebildet) ist in den Quer- und/oder in den Längskanälen angeordnet.

Der formbeständige Körper ist bevorzugt druckfest, also im Wesentlichen stabil gegenüber den in der Verwendungssituation zu erwartenden Druckdifferenzen, so dass beim Einstellen eines Drucks, der auf die obere Lage oder auf eine separate Umhüllung ausgeübt wird, das Harz ungehindert durch die Fließhilfe fließen kann, selbst wenn ein Druck in dem Harzmedium kleiner sein sollte als erstgenannter Druck. Ein Differenzdruck kann insbesondere mittels einer Druckdifferenz zwischen dem gasförmigen Medium des Innenraums oberhalb der oberen Lage und dem gasförmigen Medium im Bereich des Fasermaterials unterhalb der unteren Lage aufbrachten werden, so wie es auch bei einem Niederdruck-Infiltrationsverfahren durchgeführt werden kann.

Gemäß einer vorteilhaften Ausführungsform ist der Auslass durch eine Perforation in der unteren Lage und/oder eine Harzdurchlässigkeit der unteren Lage bereitgestellt. Eine Perforation kann auf einfache Weise in der unteren Lage vorgesehen sein, so dass eine einfach aufgebaute Fließhilfe bereitgestellt werden kann. Als Perforation ist dabei eine Mehrzahl von Öffnungen bzw. Löchern aufzufassen, durch welche das Harz aus der Fließhilfe austreten und in das Fasermaterial eingeleitet werden kann. Die Öffnungen können durch Perforieren in die untere Lage eingebracht werden. Über die Anzahl, Dichte, Größe und Verteilung der Öffnungen über die untere Lage kann die Fließhilfe auf einfache Weise in Hinblick auf spezifische Harzeigenschaften wie z. B. die Viskosität ausgelegt werden, insbesondere um Druckverhältnisse und einen bestimmten Harz-Volumenstrom einzustellen. Beispielsweise kann der Abstand der Öffnungen bzw. Löcher zwischen 1 mm bis 10 cm variieren, bei einem Durchmesser zwischen 10 µm bis 5 mm. Vorteilhaft wird der Abstand und/oder der Durchmesser der Öffnungen bzw. Löcher so gewählt werden, dass die Durchlässigkeit des Harzflusses an die Dicke des Fasermaterials angepasst ist. Insbesondere können die Öffnungen bzw. Löcher in zumindest einem Teilbereich der unteren Lage einen unterschiedlichen Durchmesser, Abstand und/oder Verteilung aufweisen.

Die Harzdurchlässigkeit kann z. B. durch einen flächig angeordneten porösen Materialabschnitt der unteren Lage gebildet sein. Bevorzugt ist die untere Lage nur in einem oder mehreren Abschnitten porös, in welchem bzw. in welchen Harz auf das Faserverbundbauteil ausgeleitet werden soll. Die Porosität der unteren Lage kann eine Eigenschaft der unteren Lage sein, die zumindest weitgehend unabhängig von einer Temperatur und einem Druck ist. Wahlweise kann die Porosität der unteren Lage temperaturabhängig und/oder druckabhängig einstellbar sein, insbesondere indem sich die Porosität erst einstellt, nachdem eine bestimmte Temperatur und/oder ein bestimmter Druck eingestellt wurden, oder indem sich die Porosität verändert, wenn die Temperatur und/oder der Druck verändert wird.

Gemäß einer vorteilhaften Ausführungsform ist die untere Lage der Fließhilfe zweischichtig ausgebildet: die dem Fasermaterial zugewandte erste Schicht der unteren Lage ist aus einer Folie gebildet, die eine hohe Schmelztemperatur und/oder hohe Festigkeit aufweist. Beispielsweise kann bei einer Infiltration mit einem bei 80°C zu härtenden Harz für die erste Schicht eine Folie mit einem Schmelzpunkt von 100°C oder größer gewählt werden. Vorteilhafterweise, ist die erste Schicht während des Infiltration und/oder Aushärtung beständig, das heißt, dass die erste Schicht weder schmilzt noch durchbricht. Die erste Schicht der unteren Lage weist die beschriebene Porosität auf. Die zweite Schicht der unteren Lage ist aus einer Folie mit niedrigerer Schmelztemperatur (z.B. 50°C) und/oder geringerer Festigkeit als die der ersten Schicht gebildet. Die zweite Schicht bedeckt oder schließt die Öffnungen bzw. Löcher in der dem Fasermaterial zugewandten ersten Schicht. Vorteilhafterweise erfolgt das Öffnen der Öffnungen bzw. Löcher bei einer Temperatur, bei der die Reaktion des Harzes langsam erfolgt, so dass ein vollständiges Durchtränken des Fasermaterials ermöglicht wird. Erst nach dem Schmelzen der zweiten Schicht fließt das Harz durch die Öffnungen bzw. Löcher der ersten Schicht der unteren Lage in das Fasermaterial. In dieser Ausführungsform kann die obere Lage aus der gleichen Folie wie die erste Schicht der unteren Lage gebildet sein.

Die Porosität der unteren Lage kann auch abschnittsweise variieren, z. B. in Bereichen des Fließraums mit einem höheren Fließwiderstand größer sein als in Bereichen mit einem niedrigeren Fließwiderstand, so dass das Harz gleichförmig auf das Fasermaterial ausgeleitet werden kann. Andererseits kann es vorteilhaft sein, das Harz bewusst ungleichförmig in das Fasermaterial einzubringen, um beispielsweise die lokal unterschiedliche Bauteildicke berücksichtigen zu können. Gemäß einer anderen Ausführungsform weist der Randbereich der Fließhilfe (wenigstens) eine Austrittsöffnung auf. Durch eine von dem Auslass separate Austrittsöffnung kann der Harzfluss (weitgehend) unabhängig von dem Aufbau der Fließhilfe beeinflusst werden. Die Austrittsöffnung kann z. B. zum Anlegen eines Unterdrucks, insbesondere mittels einer Vakuumpumpe, verwendet werden. Die Austrittsöffnung kann z. B. gegenüberliegend zu dem Einlass angeordnet sein, insbesondere an einem zum Einlass relativ weit entfernten Punkt, um das Weiterleiten des Harzes auch in diejenigen Bereiche des Fließraums zu begünstigen, welche nur bei Überwindung eines verhältnismäßig großen Fließwiderstands erreichbar sind. Der Harzfluss kann damit einerseits über einen Überdruck eingestellt werden, andererseits mittels der Austrittsöffnung gerichtet werden. Ein Unterdruck kann dabei auch z. B. nur während eines Befüllens der Fließhilfe an der Austrittsöffnung angelegt werden. Die Austrittsöffnung kann dann verschlossen oder blockiert werden, sobald die Fließhilfe vollständig mit Harz gefüllt ist und das Harz durch den Auslass in das Fasermaterial eingeleitet werden soll. Somit kann vermieden werden, dass Bereiche des Fasermaterials, die nahe zum Einlass angeordnet sind, mit mehr Harz getränkt werden als andere Bereiche. Das Tränken mit Harz erfolgt dann gleichzeitig durch den gesamten Auslass, insbesondere alle Löcher einer Perforation, wenn die Fließhilfe vollständig gefüllt ist und der Druck in dem Harz bzw. in der Fließhilfe einen bestimmten Wert übersteigt.

Die Austrittsöffnung kann jedoch auch ohne Pumpe als eine Art Druckregulierungsventil ausgebildet sein, aus welcher Harz austreten kann, ohne in Kontakt mit dem Fasermaterial zu gelangen. Hierdurch kann die Gefahr eines Aufplatzens der Fließhilfe ausgeschlossen werden.

Die erfindungsgemäße Fließhilfe kann in einem Infusionsaufbau zum Infiltrieren von Fasermaterial mit Harz zur Herstellung eines Faserverbundbauteils angeordnet sein, insbesondere unmittelbar auf dem Fasermaterial. Wahlweise kann die Fließhilfe das Fasermaterial komplett oder nur bereichsweise bedecken, je nach durchzuführender Aufgabe. Die Größe und die Geometrie der Fließhilfe kann frei gewählt und wahlweise spezifisch an die Größe und/oder Geometrie des herzustellenden Faserverbundbauteils angepasst werden. Dabei kann die Fließhilfe mittels der oberen Lage auch selbst eine gasdichte Umhüllung nach Art einer "Vakuumfolie" bereitstellen, wodurch ein einfacher Aufbau zur Anwendung von Niederdruck-Infiltrationstechniken bereitgestellt werden kann. Die obere Lage kann dabei dazu dienen, das Fasermaterial in dem Innenraum gasdicht von der Umgebung bzw. der Atmosphäre abzuschotten, so dass seitens des Fasermaterials ein Unterdruck oder zumindest eine Druckdifferenz erzeugt werden kann. Die Verwendung einer von der Fließhilfe separaten Vakuumfolie ist somit nicht notwendigerweise erforderlich. Auch kann eine Variante der Fließhilfe verwendet werden, so dass die Fließhilfe an sich eine gasdichte Umhüllung nach Art einer "Vakuumfolie" bereitstellt.

Gemäß einer vorteilhaften Ausführungsform weist der Infusionsaufbau eine Basis mit einer Auflagefläche für das Fasermaterial und eine luftdichte und zur Auflagefläche hin abdichtbare Umhüllung zum Abdecken des Fasermaterials auf, um eine Infiltrierung des Fasermaterials mittels Unterdruck zu bewirken, wobei die Fließhilfe in einem Innenraum des Infusionsaufbaus angeordnet ist. Hierdurch kann der Harzfluss in das Fasermaterial unterstützt werden. Auch kann die Fließhilfe auf einfache Weise an das Fasermaterial angepresst werden. Die Umhüllung kann z. B. als eine separate Vakuumfolie ausgebildet sein (Alternativ kommt z. B. in Betracht, einen über den Randbereich der Fließhilfe hinausgehenden Randbereich einer der beiden Lagen als Umhüllung zu nutzen).

Der Infusionsaufbau weist bevorzugt beispielsweise zur Druckerzeugung Fördermittel zum Bereitstellen eines Harzes mit Überdruck bzw. mit hohem Volumenstrom auf oder ist mit separat von dem Infusionsaufbau vorgesehenen Fördermitteln gekoppelt, um Harz über den (wenigstens einen) Einlass in die Fließhilfe einzuleiten.

Gemäß einer vorteilhaften Ausführungsform weist der Infusionsaufbau eine mikroporöse Membran auf, welche einen Teil des Auslasses der Fließhilfe bildet. Hierdurch kann die Wirkung eines Vakuums gleichförmig auf das gesamte Fasermaterial verteilt werden. Auch kann das Harz auf einfachere Weise oder an mehreren Stellen aus der Fließhilfe ausgeleitet werden. Auch kann ein Weiterleiten innerhalb des Fließraums dadurch erleichtert werden, dass die poröse Membran eine räumlich ausgedehnte Schnittstelle bildet, über welche ein Druckgefälle erzeugt werden kann. Dadurch kann vermieden werden, dass das Harz (punktuell oder linienförmig) zu vorbestimmten Punkten fließt. Das Harz strömt vielmehr homogener (flächig) zu den porösen Membranabschnitten.

An der durch die Membran gebildeten Schnittstelle kann ein Evakuieren des Infusionsaufbaus erfolgen. Bevorzugt ist die mikroporöse Membran in dem Randbereich und/oder über einen Flächenabschnitt der unteren Lage angeordnet. Die Membran kann auch zwischen mehreren Fließhilfen angeordnet sein. Als mikroporöse Membranen können z. B. so genannte "Vaccum Assisted Process" (VAP)-Membranen zum Einsatz kommen, also semipermeable Membranen, die für Gas durchlässig sind, das Harz aber zurückhalten. Hierdurch lassen sich Gaseinschlüsse im Fasermaterial (so genannte "dry spots") effektiv vermeiden.

Bei dem erfindungsgemäßen Verfahren zum Infiltrieren von Fasermaterial mit Harz zur Herstellung eines Faserverbundbauteils mittels einer erfindungsgemäßen Fließhilfe wird die zuvor genannte Aufgabe dadurch gelöst, dass ein Einleiten des Harzes in den Fließraum, ein Verteilen des Harzes im Fließraum sowie ein Ausleiten des Harzes aus dem Fließraum erfolgt, wobei das Einleiten mit Überdruck erfolgt. Hierdurch kann das Harz unter einer höheren absoluten Druckdifferenz und infolge dessen mit höherem Volumenstrom durch den Fließraum geleitet werden als dies allein durch Erzeugen eines Unterdrucks im Aufbau-Innenraum möglich wäre. Dies erhöht die Effizienz des Verfahrens, weil Harzrückstände in der Fließhilfe, die bei bekannten Fließhilfen auftreten können, vermindert werden oder vernachlässigbar sind. Ein Harzfluss kann zum einen mit einer hohen Fließrate bereitgestellt, zum anderen kann die Ausbreitung des Harzes innerhalb des Fasermaterials begünstigt werden.

Gemäß einer vorteilhaften Ausführungsform erfolgt das Infiltrierungsverfahren unter Verwendung eines Infusionsaufbaus der beschriebenen Art, wobei das Ausleiten des Harzes durch Erzeugen eines Unterdrucks unterstützt werden kann. Hierdurch kann das Ausbreiten des Harzes innerhalb des Fasermaterials auf besonders gleichförmige Weise erfolgen, und die Vorteile eines Überdrucks in dem Harzmedium innerhalb der Fließhilfe können mit den Vorteilen der Niederdruck-Infiltrationstechnik kombiniert werden.

Die Erfindung wird nachfolgend anhand von Ausführungsbeispielen mit Bezug auf die beigefügten Zeichnungen weiter beschrieben. Es zeigen:
- **Fig. 1**: in einer schematischen Draufsicht eine Fließhilfe gemäß einem Ausführungsbeispiel der Erfindung;
- **Fig. 2**: in einer schematischen Schnittansicht die in der Fig. 1 gezeigte Fließhilfe in einem harzgefüllten Zustand;
- **Fig. 3a**: in einer schematischen Seitenansicht eine Fließhilfe gemäß einem Ausführungsbeispiel der Erfindung in einem nicht beaufschlagten Zustand;
- **Fig. 3b**: in einer schematischen Seitenansicht die in der Fig. 3a gezeigte Fließhilfe in einem harzgefüllten Zustand;
- **Fig. 4a**: in einer schematischen Seitenansicht einen Infusionsaufbau mit einer Fließhilfe gemäß einem Ausführungsbeispiel der Erfindung, wobei die Fließhilfe mit einem Fördermittel gekoppelt ist;
- **Fig. 4b**: in einer schematischen Seitenansicht einen Infusionsaufbau mit einer Fließhilfe gemäß einem Ausführungsbeispiel der Erfindung, wobei über der Fließhilfe eine separate gasdichte Umhüllung vorgesehen ist und die Fließhilfe mit einer Vakuumpumpe gekoppelt ist; und
- **Fig. 4c**: in einer schematischen Seitenansicht einen Infusionsaufbau mit einer Fließhilfe gemäß einem Ausführungsbeispiel der Erfindung, wobei die Fließhilfe ein zwischen einer oberen und unteren Lage angeordnetes Verteilermedium aufweist.

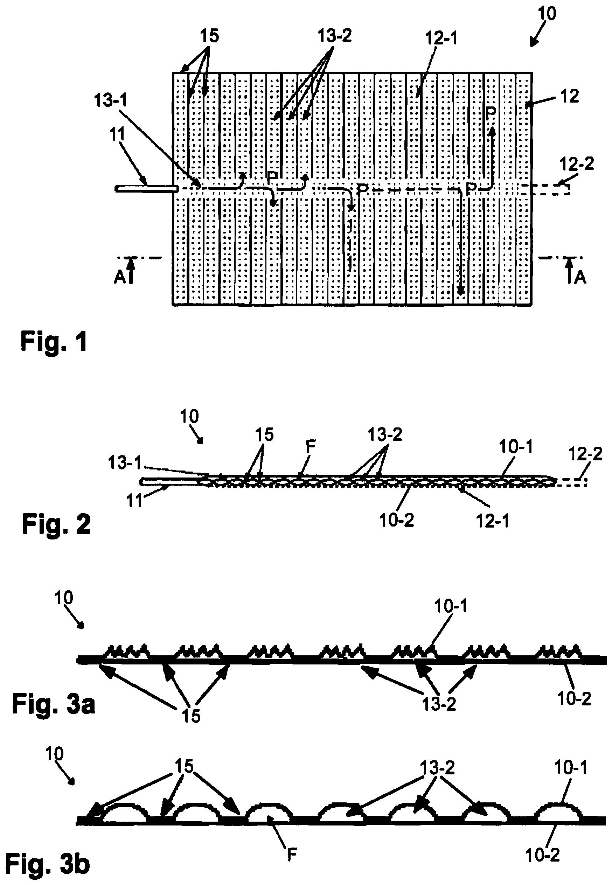

Fig. 1 zeigt eine Fließhilfe 10 mit einem Einlass 11 zum Einleiten von Harz, der an einen Längskanal 13-1 mündet, welcher zu davon abzweigenden Querkanälen 13-2 führt. Die Querkanäle 13-2 sind durch Verbindungsnähte 15 gebildet. Ein Auslass 12 zum Ausleiten von Harz ist durch Perforationen 12-1 gebildet, welche über die gesamte Fließhilfe 10 gleichförmig verteilt angeordnet sind. Die Fließhilfe 10 kann wahlweise eine Austrittsöffnung 12-2 (gestrichelt angedeutet) aufweisen, an welcher ein Differenzdruck erzeugt werden kann.

Harz strömt von dem Einlass 11 durch den Längskanal 13-1 und die Querkanäle 13-2 entlang von Fließpfaden P zu den Perforationen 12-1 und kann über die Perforationen 12-1 aus der Fließhilfe 10 herausfließen. Die Perforationen 12-1 bilden somit eine Schnittstelle zu einem zu infiltrierenden Fasermaterial bzw. herzustellenden Faserverbundbauteil (nicht dargestellt).

Fig. 2 ist eine schematische Schnittansicht längs der Linie A-A in Fig. 1 und zeigt eine obere Lage 10-1 und eine untere Lage 10-2 der Fließhilfe 10, zwischen welchen ein Fließraum F aufgespannt ist. Zwischen den Lagen 10-1, 10-2 sind die Verbindungsnähte 15 vorgesehen, mittels welchen die erwähnten Längs- und Querkanäle 13-1, 13-2 ausgebildet werden und die Lagen 10-1, 10-2 in einem vorgegebenen Abstand zueinander angeordnet bzw. gehalten werden können. Die Verbindungsnähte 15 durchziehen die Fließhilfe 10 und können direkt an den Lagen 10-1, 10-2 fixiert sein oder wahlweise auch an zusätzlichen Verbindungsmitteln (nicht dargestellt), insbesondere Trennwänden, welche sich z. B. senkrecht zu den Lagen 10-1, 10-2 erstrecken.

Bei der nachfolgenden Beschreibung von weiteren Ausführungsbeispielen werden für gleichwirkende Komponenten die gleichen Bezugszahlen verwendet. Dabei wird im Wesentlichen nur auf die Unterschiede zu dem bereits beschriebenen Ausführungsbeispiel eingegangen und im Übrigen hiermit ausdrücklich auf die Beschreibung der vorangegangenen Ausführungsbeispiele verwiesen.

Fig. 3a zeigt eine Fließhilfe 10 gemäß eines weiteren Ausführungsbeispiels, bei welcher eine obere Lage 10-1 in Verbindungsstellen 15 mit einer unteren Lage 10-2 verbunden ist, wobei die obere Lage 10-1 zwischen den Verbindungsstellen 15 eine Materialraffung aufweist. Die obere Lage 10-1 weist zwischen den jeweiligen Verbindungsstellen 15 jeweils mehr Material auf als die untere Lage 10-2. Durch die Materialraffung kann bei Harzbeaufschlagung zwischen den Verbindungsstellen 15 jeweils ein relativ voluminöser Kanal bereitgestellt werden. Im dargestellten Beispiel ist dies für die Querkanäle 13-2 der Fall.

Fig. 3b zeigt die Fließhilfe im harzbeaufschlagten Zustand. Man erkennt, dass die Materialraffung der oberen Lage 10-1 der Fließhilfe 10 einen relativ großen Fließraum F begrenzt, sobald Harz in die Fließhilfe 10 eingeleitet wird und durch die Kanäle 13-2 strömt. Das Harz sorgt dafür, dass die Materialraffung gespannt wird und die Kanäle 13-2 jeweils eine bestimmte Geometrie annehmen und den harzführenden Bereichen einen bestimmten Querschnitt verleihen, hier einen halbkreisförmigen Querschnitt. Dabei bleibt die untere Lage 10-2 in einer Ebene angeordnet und kann somit flächig an das mittels der Fließhilfe 10 zu infiltrierende Fasermaterial (nicht dargestellt) zur Anlage gebracht werden.

Fig. 4a zeigt ein weiteres Ausführungsbeispiel. Dargestellt ist ein Infusionsaufbau 1 mit einer Basis 2 (Formfläche eines Werkzeuges), welche eine Auflagefläche 2-1 zur Aufnahme von Fasermaterial 5 aufweist. Auf dem Fasermaterial 5 ist eine Fließhilfe 10 angeordnet. Das Fasermaterial 5 und die Fließhilfe 10 sind zusammen in einem Innenraum I des Infusionsaufbaus 1 angeordnet. Der Innenraum I kann z. B. der Innenraum eines Ofens oder einer Druckkammer (Autoklav) sein, in welchem der Infusionsprozess und gegebenenfalls auch ein nachfolgender Aushärteprozess durchgeführt wird. Ein Fördermittel 4 ist mit einem Einlass 11 der Fließhilfe gekoppelt und dazu ausgebildet, Harz mit einem einstellbaren Druck zu der Fließhilfe 10 zuzuführen, insbesondere unter Überdruck. Durch eine untere Lage 10-2 der Fließhilfe 10, in welcher ein Auslass 12 gebildet ist (z. B. durch eine Porosität der unteren Lage 10-2 und/oder nachträglich dort ausgebildete Performationen), kann das Harz aus der Fließhilfe 10 heraus fließen und gemäß den angedeuteten Pfeilen in das Fasermaterial 5 hineinfließen.

Fig. 4b zeigt ein weiteres Ausführungsbeispiel. Dargestellt ist eine Vakuumpumpe 6, die mit einer Austrittsöffnung 12-2 der Fließhilfe 10 sowie mit Ableitungen in der Basis 2 gekoppelt ist. Ferner ist die Vakuumpumpe 6 mit einem Raum unter einer gasdichten Umhüllung bzw. Vakuumfolie 3 gekoppelt, welche die Fließhilfe 10 bedeckt. Die Fließhilfe 10 weist Verbindungsmittel 15 auf, welche eine obere und eine untere Lage der Fließhilfe 10 in einem definierten Abstand zueinander anordnen. Die untere Lage10-2 der Fließhilfe 10 weist einen zweischichtigen Aufbau auf, wobei deren erste Schicht den Auslass aufweist (z. B. durch eine Porosität der unteren Lage 10-2 und/oder nachträglich dort ausgebildete Performationen) und die zweite Schicht den Auslass erstmal verschließt. Durch Schmelzen der zweiten Schicht wird der Auslass geöffnet und das Harz fließt in das Fasermaterial 5.

Fig. 4c zeigt ein weiteres Ausführungsbeispiel. Dargestellt ist eine Fließhilfe 10, in welcher zwischen einer oberen Lage 10-1 und einer unteren Lage 10-2 ein Verteilermedium 16 (z. B. ein Faservlies, oder z. B. eine formstabile Struktur) angeordnet ist. Das Verteilermedium 16 erstreckt sich innerhalb des zwischen den Lagen 10-1, 10-2 gebildeten Fließraums F und kann die beiden Lagen 10-1, 10-2 zueinander in einem definierten Abstand halten, z. B. für den Fall dass während des Infliltrationsprozesses eine gasdichte Umhüllung (nicht dargestellt) auf der oberen Lage 10-1 der Fließhilfe 10 aufliegt und einen Gas-Druck auf die Fließhilfe 10 ausübt. Das Verteilermedium 16 ist von Harz durchströmbar und kann einzelne Fließpfade für das Harz vorgeben, insbesondere mit einem spezifischen Fließwiderstand.

## Patentansprüche

1. Fließhilfe (10) für einen Infusionsaufbau (1) zum Infiltrieren von Fasermaterial (5) mit Harz zur Herstellung eines Faserverbundbauteils, mit:
einer harzdichten oberen Lage (10-1), welche eine flächige Erstreckung aufweist;
einer unteren Lage (10-2), welche eine flächige Erstreckung aufweist, wobei die obere Lage (10-1) und die untere Lage (10-2) in einem Randbereich der Fließhilfe miteinander verbunden sind und einen Fließraum (F) zwischen den beiden Lagen (10-1, 10-2) bereitstellen, wobei die obere Lage (10-1) und die untere Lage (10-2) innerhalb eines vom Randbereich umgrenzten Mittelbereichs an mehreren Stellen punkt- und/oder linienförmig und/oder flächig derart miteinander verbunden sind, so dass zwischen den beiden Lagen als Fließpfade (P) zum gerichteten Weiterleiten des Harzes innerhalb des Fließraums (F) mindestens ein Längskanal gebildet ist, von welchem aus sich mehrere Querkanäle erstrecken, und wobei die untere Lage mindestens einen Auslass (12) zum Ausleiten von Harz aus der Fließhilfe (10) heraus in einen Innenraum des Infusionsaufbaus bereitstellt; und
einem Einlass (11) zum Zuführen des Harzes in den Fließraum (F).

2. Fließhilfe nach Anspruch 1, wobei zwischen den beiden Lagen (10-1, 10-2) ein Verteilermedium (16) angeordnet ist.

3. Fließhilfe nach Anspruch 1 oder 2, wobei der mindestens eine Auslass (12) durch eine Perforation (12-1) in der unteren Lage (10-2) und/oder eine Harzdurchlässigkeit der unteren Lage bereitgestellt ist.

4. Fließhilfe nach einem der vorhergehenden Ansprüche, wobei der Randbereich mindestens eine Austrittsöffnung (12-2) aufweist.

5. Infusionsaufbau (1) zum Infiltrieren von Fasermaterial (5) mit Harz zur Herstellung eines Faserverbundbauteils, wobei der Infusionsaufbau (1) eine Fließhilfe (10) nach einem der Ansprüche 1 bis 4 aufweist.

6. Infusionsaufbau nach Anspruch 5, wobei der Infusionsaufbau eine Basis (2) mit einer Auflagefläche (2-1) für das Fasermaterial (5) und eine luftdichte und zur Auflagefläche hin abdichtbare Umhüllung (3) zum Abdecken des Fasermaterials aufweist, um eine Infiltrierung des Fasermaterials mittels Unterdruck zu bewirken, wobei die Fließhilfe (10) in einem Innenraum des Infusionsaufbaus (1) angeordnet ist.

7. Verfahren zum Infiltrieren von Fasermaterial (5) mit Harz zur Herstellung eines Faserverbundbauteils, das Verfahren aufweisend
- Einleiten des Harzes in einen Fließraum (F) einer Fließhilfe (10) nach einem der Ansprüche 1 bis 4,
- Verteilen des Harzes im Fließraum und
- Ausleiten des Harzes aus dem Fließraum,
wobei das Einleiten des Harzes in den Fließraum (F) mit Überdruck erfolgt.

8. Verfahren nach Anspruch 7 unter Verwendung eines Infusionsaufbaus (1) nach einem der Ansprüche 5 oder 6, wobei das Ausleiten des Harzes durch Erzeugen eines Unterdrucks unterstützt wird.

## Claims

1. Flow promoter (10) for an infusion structure (1) for infiltrating fibrous material (5) with resin for producing a fibre composite component, with:
a resin-impermeable top layer (10-1) which has an areal extent;
a bottom layer (10-2) which has an areal extent, wherein the top layer (10-1) and the bottom layer (10-2) are connected to one another in a peripheral region of the flow promoter and provide a flow space (F) between the two layers (10-1, 10-2), wherein the top layer (10-1) and the bottom layer (10-2) are connected to one another in a punctiform and/or linear and/or areal manner at multiple locations within a centre region bounded by the peripheral region in such a manner that, between the two layers, at least one longitudinal channel is formed as flow paths (P) for the targeted conveying of the resin within the flow space (F), out of which longitudinal channel(s) multiple transverse channels extend, and wherein the bottom layer provides at least one outlet (12) for discharging resin out of the flow promoter (10) into an interior space of the infusion structure; and
an inlet (11) for conducting the resin into the flow space (F).

2. Flow promoter according to Claim 1, wherein a distribution medium (16) is arranged between the two layers (10-1, 10-2).

3. Flow promoter according to Claim 1 or 2, wherein the at least one outlet (12) is provided by a perforation (12-1) in the bottom layer (10-2) and/or a permeability of the bottom layer to resin.

4. Flow promoter according to one of the preceding claims, wherein the peripheral region has at least one outlet opening (12-2).

5. Infusion structure (1) for infiltrating fibrous material (5) with resin for producing a fibre composite component, wherein the infusion structure (1) has a flow promoter (10) according to one of Claims 1 to 4.

6. Infusion structure according to Claim 5, wherein the infusion structure has a base (2) with a support surface (2-1) for the fibrous material (5) and an air-tight enclosure (3) that can be sealed towards the support surface for covering the fibrous material in order to bring about an infiltration of the fibrous material by means of negative pressure, wherein the flow promoter (10) is arranged in an interior space of the infusion structure (1).

7. Method for infiltrating fibrous material (5) with resin for producing a fibre composite component, the method comprising:
- introducing the resin into a flow space (F) of a flow promoter (10) according to one of Claims 1 to 4,
- distributing the resin in the flow space and
- discharging the resin from the flow space,
wherein the introducing of the resin into the flow space (F) takes place by way of excess pressure.

8. Method according to Claim 7, using an infusion structure (1) according to either of Claims 5 and 6, wherein the discharging of the resin is supported by creating a negative pressure.

## Revendications

1. Auxiliaire d'écoulement (10) destiné à une structure d'imprégnation (1) pour imprégner une matière fibreuse (5) avec une résine afin de produire un composant composite fibreux, ledit auxiliaire d'écoulement comprenant :
une couche supérieure (10-1) étanche à la résine qui présente une extension sensiblement bidimensionnelle ;
une couche inférieure (10-2) qui présente une extension sensiblement bidimensionnelle, la couche supérieure (10-1) et la couche inférieure (10-2) étant reliées l'une à l'autre dans une région de bord de l'auxiliaire d'écoulement et produisant un espace d'écoulement (F) entre les deux couches (10-1, 10-2), la couche supérieure (10-1) et la couche inférieure (10-2) étant reliées l'une à l'autre de manière ponctuelle et/ou linéaire et/ou surfacique en une pluralité d'endroits dans une zone médiane délimitée par la zone de bord de façon à former entre les deux couches au moins un conduit longitudinal, à partir duquel s'étendent une pluralité de canaux transversaux, sous la forme de chemins d'écoulement (P) permettant le transfert dirigé de la résine à l'intérieur de l'espace d'écoulement (F), et la couche inférieure fournissant au moins une sortie (12) permettant à la résine de sortir de l'auxiliaire d'écoulement (10) et d'entrer dans l'espace intérieur de la structure d'imprégnation ; et
une entrée (11) destinée à introduire la résine dans l'espace d'écoulement (F).

2. Auxiliaire d'écoulement selon la revendication 1, un milieu de distribution (16) étant disposé entre les deux couches (10-1, 10-2).

3. Auxiliaire d'écoulement selon la revendication 1 ou 2, l'au moins une sortie (12) étant réalisée par une perforation (12-1) ménagée dans la couche inférieure (10-2) et/ou par une perméabilité de la couche inférieure à la résine.

4. Auxiliaire d'écoulement selon l'une des revendications précédentes, la région de bord comportant au moins une ouverture de sortie (12-2).

5. Structure d'imprégnation (1) destinée à imprégner une matière fibreuse (5) avec une résine pour produire un composant composite fibreux, la structure d'imprégnation (1) comportant un auxiliaire d'écoulement (10) selon l'une des revendications 1 à 4.

6. Structure d'imprégnation selon la revendication 5, la structure d'imprégnation comportant une base (2), pourvue d'une surface de support (2-1) destinée à la matière fibreuse (5), et une enveloppe (3) étanche à l'air, pouvant être étanchéifiée par rapport à la surface de support et destinée à recouvrir la matière fibreuse pour permettre l'imprégnation de la matière fibreuse par dépression, l'auxiliaire d'écoulement (10) étant disposé dans l'espace intérieur de la structure d'imprégnation (1).

7. Procédé d'imprégnation d'une matière fibreuse (5) avec de la résine pour produire un composant composite fibreux, le procédé comprenant les étapes suivantes
- introduire la résine dans un espace d'écoulement (F) d'un auxiliaire d'écoulement (10) selon l'une des revendications 1 à 4,
- distribuer la résine dans l'espace d'écoulement et
- faire sortir la résine de l'espace d'écoulement, la résine étant introduite dans l'espace d'écoulement (F) par surpression.

8. Procédé selon la revendication 7 utilisant une structure d'imprégnation (1) selon l'une des revendications 5 et 6, la sortie de la résine étant favorisée par génération d'une dépression.
